# EUROPEAN PATENT APPLICATION

(11) **EP 4 803 665 A1**
(43) Date of publication of application: **09.09.2026**
(21) Application number: 25221354.1
(22) Date of filing: 08.12.2025
(51) Int. Cl.: C25B 1/04, C25B 9/23, C25B 11/04

(54) **ANODE CATALYST LAYER AND MEMBRANE ELECTRODE ASSEMBLY**

(30) Priority: 06.03.2025 JP 2025035561
(71) Applicant: Toyota Jidosha Kabushiki Kaisha, Toyota-shi, Aichi-ken 471-8571 (JP)
(72) Inventor: OKUBO, Keiichi, Toyota-shi, 471-8571 (JP); TSUCHIYA, Kimihiro, Toyota-shi, 471-8571 (JP)
(74) Representative: TBK

(57) **Abstract**

The present invention relates to an anode catalyst layer that is included in a water electrolysis cell. The anode catalyst layer includes: an ionomer having sulfonic acid groups; and an anode catalyst. The total amount of the sulfonic acid groups in the anode catalyst layer is 119 nmol/cm² or more.

## Description

### BACKGROUND OF THE INVENTION

### 1. Field of the Invention

The present invention relates to anode catalyst layers and membrane electrode assemblies for use in water electrolysis cells.

### 2. Description of Related Art

Water electrolysis cells for producing hydrogen and oxygen by electrolysis of water are conventionally known in the art. Such a water electrolysis cell includes, for example, a membrane electrode assembly in which an anode catalyst layer that generates oxygen is laminated on a first surface of a solid polymer electrolyte membrane and a cathode catalyst layer that generates hydrogen is laminated on a second surface of the solid polymer electrolyte membrane.

For example, Japanese Unexamined Patent Application Publication No. 2023-101355 (JP 2023-101355 A) discloses a water electrolysis cell having a laminated structure in which a membrane electrode assembly with catalyst electrode layers on both sides of an electrolyte membrane is sandwiched between a pair of gas diffusion layers. A cation-absorbing layer made of an ionomer having cation absorption capability is provided in the gas diffusion layer(s), the catalyst electrode layer(s), or the electrolyte membrane.

### SUMMARY OF THE INVENTION

The water electrolysis cell disclosed in JP 2023-101355 A aims to suppress degradation in proton-conducting performance by providing a cation-absorbing layer that removes cations contained in water supplied to the laminated structure or used to humidify the laminated structure.

However, cations that enter a water electrolysis cell are not limited to cations contained in water supplied from outside the water electrolysis system (i.e., alkali metal or alkaline earth metal cations such as K, Na, Mg, and Ca). Transition metal cations (such as Fe, Ni, and Cu) may also enter from piping in the water electrolysis system, and transition metals (such as Ir, Ti, Nb, and Pt) may be eluted as cations due to degradation of materials of the power generation unit within the system. These various types of cations can cause deterioration of the water electrolysis cell. The water electrolysis cell disclosed in JP 2023-101355 A does not sufficiently address these issues. In addition, in JP 2023-101355 A, the cation-absorbing layer is provided only in a peripheral region of the water electrolysis cell. Accordingly, cell degradation is not sufficiently suppressed, leaving room for improvement.

In view of the above circumstances, it is an object of the present invention to provide an anode catalyst layer having excellent durability and a high tolerance to cations entering from inside and outside the system, and a membrane electrode assembly including the same.

The present inventors have found that, by increasing the amount of sulfonic acid groups in the anode catalyst layer to a predetermined level, cations can be trapped within the anode, thereby suppressing the migration of cations into the cathode or the electrolyte membrane. The present invention has been achieved based on this finding. The gist of the present invention is as follows.
(1) An anode catalyst layer included in a water electrolysis cell, the anode catalyst layer including: an ionomer having sulfonic acid groups; and an anode catalyst,
   wherein the total amount of the sulfonic acid groups in the anode catalyst layer is 119 nmol/cm² or more.
(2) The anode catalyst layer according to (1), wherein the sulfonic acid group equivalent of the ionomer is 900 g/mol or less.
(3) An anode catalyst layer included in a water electrolysis cell, the anode catalyst layer including: an ionomer having sulfonic acid groups; and an anode catalyst,
   wherein the total amount of the sulfonic acid groups in the anode catalyst layer is 169 nmol/cm² or more, and the sulfonic acid group equivalent of the ionomer is 800 g/mol or less.
(4) A membrane electrode assembly for a water electrolysis cell, the membrane electrode assembly including:
   an electrolyte membrane; the anode catalyst layer according to (1), the anode catalyst layer being laminated on a first surface of the electrolyte membrane; and a cathode catalyst layer laminated on a second surface of the electrolyte membrane, wherein:
   the cathode catalyst layer includes an ionomer having sulfonic acid groups, and a cathode catalyst; and
   the ratio of the total amount of the sulfonic acid groups in the anode catalyst layer to the total amount of the sulfonic acid groups in the cathode catalyst layer is 1.02 or more.

The present invention provides an anode catalyst layer exhibiting high durability by controlling the amount of sulfonic acid groups such that cations are trapped and migration of cations to the cathode or the electrolyte membrane is suppressed. The present invention also provides a membrane electrode assembly including such a highly durable anode catalyst layer.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:

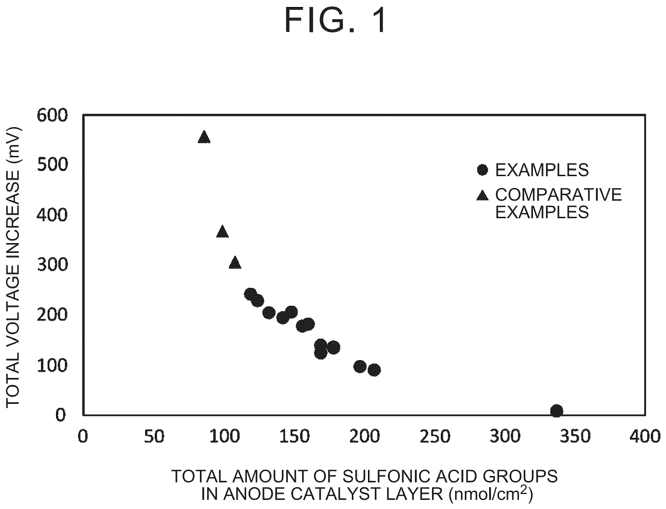

FIG. 1 is a graph showing the relationship between the total amount of sulfonic acid groups in the anode catalyst layer and the total voltage increase resulting from a durability test.

### DETAILED DESCRIPTION OF EMBODIMENTS

The present invention will now be described in detail based on an embodiment.
First, the configuration of a water electrolysis cell including an anode catalyst layer according to the present embodiment will be described. A water electrolysis cell is a device that decomposes water into hydrogen and oxygen, and a plurality of such water electrolysis cells is stacked to form a water electrolysis stack.

The water electrolysis cell has a multilayer structure in which an anode (oxygen evolution electrode) is disposed on one side of an electrolyte membrane and a cathode (hydrogen evolution electrode) is disposed on the other side of the electrolyte membrane. On the anode side, an anode catalyst layer, an anode gas diffusion layer, and an anode separator are laminated in this order from the side closer to the electrolyte membrane. On the cathode side, a cathode catalyst layer, a cathode gas diffusion layer, and a cathode separator are laminated in this order from the side closer to the electrolyte membrane. The membrane electrode assembly (MEA) refers to a laminate formed of an electrolyte membrane, an anode catalyst layer laminated on a first surface of the electrolyte membrane, and a cathode catalyst layer laminated on a second surface of the electrolyte membrane.

In the present embodiment, the electrolyte membrane is sandwiched between the anode and the cathode. The electrolyte membrane is a membrane formed of a polymer having ion exchange groups. For example, the polymer may have at least one selected from sulfonic acid groups, phosphoric acid groups, and quaternary ammonium groups as ion exchange groups. The electrolyte membrane may be an anion exchange membrane or a cation exchange membrane. For example, the electrolyte membrane may be formed of a perfluorocarbon sulfonic acid polymer, or a polymer mainly containing either polyether ether ketone or polybenzimidazole. When the electrolyte membrane contains sulfonic acid groups as ion exchange groups, the amount of sulfonic acid groups can be set as appropriate, and is preferably, but is not limited to, 2700 nmol or less per 1 cm² of the electrolyte membrane. When the amount of sulfonic acid groups in the electrolyte membrane is relatively small, deterioration of the water electrolysis cell can be more effectively suppressed by controlling the amount of sulfonic acid groups in the anode catalyst layer. Metals such as iridium, platinum, cerium, and manganese, or cations thereof, may be incorporated into the electrolyte membrane. When metal is incorporated into the electrolyte membrane, the metal loading in the electrolyte membrane may be 5 µg/cm² or less, or may be 3 µg/cm² or less. The metal contained in the electrolyte membrane may be in the form of a metal, an oxide, or ions. In the present embodiment, the electrolyte membrane is a proton (hydrogen ion) exchange membrane.

The thickness of the electrolyte membrane in the membrane electrode assembly is not particularly limited, but is preferably 100 µm or less, and more preferably 20 µm or less.

The anode includes an anode catalyst layer and an anode gas diffusion layer. The anode catalyst layer is laminated on a first surface of the electrolyte membrane. In the stacking direction of the water electrolysis cell, the anode gas diffusion layer is laminated on the surface of the anode catalyst layer opposite to the surface of the anode catalyst layer facing the electrolyte membrane.

The anode catalyst layer functions as an anode electrode that generates oxygen. In the present embodiment, the anode catalyst layer contains at least an ionomer having sulfonic acid groups used as a binder, and an anode catalyst.

The anode catalyst is metal particles that catalyze an oxygen evolution reaction. For example, the anode catalyst may contain at least one metal selected from platinum, ruthenium, iridium, rhodium, palladium, osmium, tungsten, lead, iron, chromium, cobalt, nickel, manganese, vanadium, molybdenum, gallium, aluminum, lanthanum, cerium, praseodymium, neodymium, samarium, gadolinium, and yttrium. The anode catalyst preferably contains iridium. The anode catalyst may contain two or more of these metals. The anode catalyst preferably mainly contains either iridium or ruthenium. The anode catalyst may be, for example, an oxide, a nitride, a sulfide, or a phosphide. The anode catalyst is preferably either an oxide or a nitride. The anode catalyst may be formed of at least one selected from iridium particles, iridium alloy particles, and composite particles containing iridium. For example, the iridium alloy particles and the composite particles containing iridium may contain at least one metal selected from ruthenium, rhodium, palladium, osmium, tungsten, lead, iron, chromium, cobalt, nickel, manganese, vanadium, molybdenum, gallium, aluminum, lanthanum, cerium, praseodymium, neodymium, samarium, gadolinium, and yttrium, in addition to iridium. The iridium alloy particles and the composite particles containing iridium may contain two or more of these metals. The content of elements other than iridium in the iridium alloy particles is not particularly limited, and for example, may be 0.11 atomic percent (at%) or more and 80 at% or less. The particle size of the metal particles constituting the anode catalyst is not particularly limited, and for example, may be 1 nm or more and 5000 nm or less. In the present embodiment, the particle size of the metal particles refers to the average crystallite size measured by X-ray diffraction. In another embodiment, the particle size of the metal particles may refer to the average particle size calculated by measuring the particle sizes of a predetermined number of metal particles with an electron microscope and averaging the measured particle sizes. To calculate the average particle size, the particle sizes of, for example, 100 to 1000 metal particles may be measured using an electron microscope.

The anode catalyst may be supported on a support. The method for supporting the anode catalyst on the support is not particularly limited, and for example, a known method such as an impregnation method may be used. The support on which the anode catalyst is supported may be in the form of primary particles or secondary particles. For example, the particle size of the primary particles constituting the support may be 5 nm or more and 5000 nm or less. The loading percentage of the anode catalyst supported on the support is not particularly limited, and for example, may be 1% or more, 50% or more, or 100% or less.

For example, the support on which the anode catalyst is supported may be formed of an oxide. For example, the oxide constituting the support may be at least one selected from titanium oxide, niobium oxide, tin oxide, tungsten oxide, and molybdenum oxide. The support on which the anode catalyst is supported may be formed of, for example, a mixture containing at least one of these oxides.

The binder or ionomer may be formed of, for example, a polymer having ion exchange groups, and includes at least an ionomer including sulfonic acid groups. For example, the binder may have, in addition to the sulfonic acid groups, either phosphoric acid groups or quaternary ammonium groups, or both, as ion exchange groups. The binder may be formed of an anion exchange polymer or a cation exchange polymer.

The binder may be formed of, for example, a perfluorocarbon sulfonic acid polymer, and may additionally contain either polyether ether ketone or polybenzimidazole.

In the present embodiment, the total amount of sulfonic acid groups in the anode catalyst layer is set to 119 nmol/cm² or more. The sulfonic acid group equivalent of the ionomer is preferably 900 g/mol or less. It is most preferable that the total amount of sulfonic acid groups in the anode catalyst layer be 169 nmol/cm² or more and that the sulfonic acid group equivalent of the ionomer be 800 g/mol or less. The sulfonic acid group equivalent of the ionomer refers to the mass of the ionomer per 1 mol of sulfonic acid groups. By controlling the total amount of sulfonic acid groups in the anode catalyst layer and the sulfonic acid group equivalent of the ionomer within the above ranges, cations can be trapped and deterioration of the water electrolysis cell can be suppressed. Specifically, during operation of a system including the water electrolysis cell, cations may enter the water electrolysis cell. For example, alkali metal or alkaline earth metal cations (such as K, Na, Mg, and Ca) may be contained in water supplied from outside the system, transition metal cations (such as Fe, Ni, and Cu) may also enter from piping in the water electrolysis system, and transition metals (such as Ir, Ti, Nb, and Pt) may be eluted as cations due to degradation of materials of the power generation unit within the system. These cations migrate from the anode to the cathode during water electrolysis due to driving forces such as water transport, electrophoresis, or concentration gradients, and accumulate on the cathode side, causing severe performance degradation of the water electrolysis cell. In the present embodiment, by controlling the amount of sulfonic acid groups contained in the anode catalyst layer as described above, cations can be trapped, and performance degradation of the water electrolysis cell can be suppressed. A highly durable water electrolysis system with an improved cation tolerance can thus be provided.

For example, the amount of sulfonic acid groups in the membrane electrode assembly can be quantified by washing the membrane electrode assembly with an acid and measuring the amount of acidic functional groups by titration. As a pretreatment, the electrolyte membrane, the cathode catalyst layer, and the anode catalyst layer may be isolated from the membrane electrode assembly, and the amount of sulfonic acid groups in each component may be quantified by performing titration separately for each.

The anode gas diffusion layer serves to distribute gas. For example, the anode gas diffusion layer may be formed of at least one selected from carbon paper, carbon fibers, carbon cloth, porous titanium, and titanium fibers. The anode gas diffusion layer may be formed of a combination of two or more of these materials. The anode gas diffusion layer may also include a microporous layer formed of either carbon or titanium particles, or both.

The cathode includes a cathode catalyst layer and a cathode gas diffusion layer. The cathode catalyst layer is laminated on a second surface of the electrolyte membrane. In the stacking direction of the water electrolysis cell, the cathode gas diffusion layer is laminated on the surface of the cathode catalyst layer opposite to the surface of the cathode catalyst layer facing the electrolyte membrane.

The cathode catalyst layer functions as a cathode electrode that generates hydrogen. In the present embodiment, the cathode catalyst layer contains at least a binder or ionomer and a cathode catalyst.

The cathode catalyst is metal particles that catalyze a hydrogen evolution reaction. For example, the cathode catalyst may contain at least one metal selected from platinum, ruthenium, iridium, rhodium, palladium, osmium, tungsten, lead, iron, chromium, cobalt, nickel, manganese, vanadium, molybdenum, gallium, aluminum, lanthanum, cerium, praseodymium, neodymium, samarium, gadolinium, and yttrium. The cathode catalyst may contain two or more of these metals. The cathode catalyst may be, for example, an oxide, a nitride, a sulfide, or a phosphide. The cathode catalyst may be formed of at least one selected from platinum particles, platinum alloy particles, and composite particles containing platinum. For example, the platinum alloy particles and the composite particles containing platinum may contain at least one metal selected from ruthenium, iridium, rhodium, palladium, osmium, tungsten, lead, iron, chromium, cobalt, nickel, manganese, vanadium, molybdenum, gallium, aluminum, lanthanum, cerium, praseodymium, neodymium, samarium, gadolinium, and yttrium, in addition to platinum. The platinum alloy particles and the composite particles containing platinum may contain two or more of these metals. The content of elements other than platinum in the platinum alloy particles is not particularly limited, and for example, may be 0.11 at% or more and 60 at% or less. The particle size of the metal particles constituting the cathode catalyst is not particularly limited, and for example, may be 1 nm or more and 100 nm or less.

The cathode catalyst may be supported on a support. The method for supporting the cathode catalyst on the support is not particularly limited, and for example, a known method such as an impregnation method may be used. The support on which the cathode catalyst is supported may be in the form of primary particles or secondary particles. For example, the particle size of the primary particles constituting the support may be 5 nm or more and 5000 nm or less. The loading percentage of the cathode catalyst supported on the support is not particularly limited, and for example, may be 1% or more, 18% or more, 48% or less, or 70% or less. For example, the support on which the cathode catalyst is supported may be formed of at least one selected from electrically conductive carbon, an oxide, and a mixture containing carbon and an oxide. For example, the carbon constituting the support may be at least one selected from carbon black such as acetylene black, Ketjenblack, and furnace black, activated carbon, graphite, glassy carbon, graphene, carbon fibers, carbon nanotubes, carbon nitride, sulfurized carbon, phosphorus-doped carbon, channel black, roller black, disc black, oil furnace black, gas furnace black, lamp black, thermal black, and Vulcan carbon. The support on which the cathode catalyst is supported may be formed of, for example, a mixture containing at least one of these carbons. The oxide constituting the support may be at least one selected from titanium oxide, niobium oxide, tin oxide, tungsten oxide, and molybdenum oxide. The support on which the cathode catalyst is supported may be formed of, for example, a mixture containing at least one of these oxides.

For example, the binder or ionomer may be formed of a polymer having ion exchange groups. For example, the binder may have at least one selected from sulfonic acid groups, phosphoric acid groups, and quaternary ammonium groups as ion exchange groups. The binder may be formed of an anion exchange polymer or a cation exchange polymer.

For example, the binder may be formed of a perfluorocarbon sulfonic acid polymer, or a polymer mainly containing either polyether ether ketone or polybenzimidazole.

When the cathode catalyst layer contains an ionomer having sulfonic acid groups as a binder, it is preferable that the total amount of sulfonic acid groups in the anode catalyst layer be greater than the total amount of sulfonic acid groups in the cathode catalyst layer. Specifically, it is preferable that the ratio of the total amount of sulfonic acid groups in the anode catalyst layer to the total amount of sulfonic acid groups in the cathode catalyst layer be adjusted to 1.02 or more. It is also preferable that the ratio of the sulfonic acid group equivalent of the anode ionomer to the sulfonic acid group equivalent of the cathode ionomer be less than 1. By relatively increasing the amount of sulfonic acid groups in the anode catalyst layer, cations that have entered the water electrolysis cell are more easily trapped, and performance degradation of the water electrolysis cell can be more effectively suppressed.

The cathode gas diffusion layer serves to distribute gas. For example, the cathode gas diffusion layer may be formed of at least one selected from carbon paper, carbon fibers, carbon cloth, porous titanium, and titanium fibers. The cathode gas diffusion layer may be formed of a combination of two or more of these materials. The cathode gas diffusion layer may also include a microporous layer formed of either carbon or titanium particles, or both.

In the water electrolysis cell described above, hydrogen and oxygen are generated from water. Specifically, when current is applied between the anode and the cathode, water supplied to the anode through a flow channel of the anode separator is decomposed into oxygen, electrons, and protons in the anode catalyst layer under an applied potential. The protons migrate through the electrolyte membrane to the cathode catalyst layer. The electrons separated in the anode catalyst layer reach the cathode catalyst layer through an external circuit. Hydrogen is then generated in the cathode catalyst layer when the protons receive electrons. The generated hydrogen reaches the cathode separator and is discharged through a flow channel of the cathode separator. The oxygen separated in the anode catalyst layer reaches the anode separator and is discharged through a flow channel of the anode separator.

The present invention will be described in further detail below using Examples and Comparative Examples. However, the present invention is not limited to the Examples.

### Examples 1 to 14 and Comparative Examples 1 to 3

A membrane electrode assembly (MEA) was fabricated in which an electrolyte membrane formed of a perfluorocarbon sulfonic acid polymer is sandwiched between an anode electrode that causes an oxygen evolution reaction and a cathode electrode that causes a hydrogen evolution reaction. Specifically, a catalyst and a perfluorocarbon sulfonic acid polymer (equivalent weight (EW): 1100) based on Nafion (manufactured by Chemours) as a polymer having ion exchange groups (ionomer or binder) were dispersed and mixed, and the resulting mixture was applied to both sides of an electrolyte membrane to form a cathode catalyst layer and an anode catalyst layer. The cathode catalyst layer, the electrolyte membrane, and the anode catalyst layer were then bonded by hot pressing at 145°C and 3 MPa to fabricate the membrane electrode assembly. The total amount of sulfonic acid groups in the anode catalyst layer was varied among Examples 1 to 14 and Comparative Examples 1 to 3. Table 1 shows the following values for each of Examples 1 to 14 and Comparative Examples 1 to 3: the ionomer loading (mg/cm²) and the total amount of sulfonic acid groups (nmol/cm²) in the anode catalyst layer; and (i) the sulfonic acid group equivalent of the anode ionomer (g/mol), (ii) the ratio of the total amount of sulfonic acid groups in the anode catalyst layer to the total amount of sulfonic acid groups in the cathode catalyst layer, and (iii) the ratio of the sulfonic acid group equivalent of the anode ionomer to the sulfonic acid group equivalent of the cathode ionomer, each calculated from the ionomer loading and the total amount of sulfonic acid groups in the anode catalyst layer.

Elyst Ir75 (iridium oxide catalyst) manufactured by Umicore was used as the anode catalyst. A Pt-supported carbon having a Pt loading of 10 wt% to 50 wt%, synthesized by a known method, was used as the cathode catalyst.

A gas diffusion layer substrate formed of carbon fibers (GDL 22BB, manufactured by SGL) and a gas diffusion layer formed of a microporous layer containing carbon particles and a water repellent were disposed on the outer side of the cathode electrode. A gas diffusion layer formed of porous titanium was disposed on the outer side of the anode electrode. A membrane electrode-gas diffusion layer assembly was thus fabricated.

The fabricated membrane electrode-gas diffusion layer assembly (with an electrode area of 1 cm²) was used, and I-V characteristics were obtained by controlling the current while ultrapure water was supplied to the anode. The cell temperature was set to 50°C, and the pressure was set to atmospheric pressure. Thereafter, an accelerated durability test was conducted at 95°C by repeating 3600 cycles of potential cycling between 0.0 V (shutdown) and 1.8 V (startup) with a hold time of 10 s at each potential. Subsequently, I-V characteristics were obtained again by controlling the current under the same conditions as before the accelerated durability test. The hydrogen permeation properties of the electrolyte membrane and the natural potential decay time of the anode were also evaluated.
The voltage before the accelerated durability test was defined as the initial voltage, and the increase in voltage after the durability test relative to the initial voltage (total voltage increase, mV) was calculated. The results are shown in Table 1. The relationship between the total amount of sulfonic acid groups in the anode catalyst layer and the total voltage increase resulting from the durability test is shown in FIG. 1.

**Table 1**

| | Ratio of Total Amount of Sulfonic Acid Groups in Anode Catalyst Layer to Total Amount of Sulfonic Acid Groups in Cathode Catalyst Layer | Ratio of Sulfonic Acid Group Equivalent of Anode Ionomer to Sulfonic Acid Group Equivalent of Cathode Ionomer | Total Amount of Sulfonic Acid Groups in Anode Catalyst Layer (nmol/cm²) | Ionomer Loading in Anode Catalyst Layer (mg/cm²) | Sulfonic Acid Group Equivalent of Anode Ionomer (g/mol) | Total Voltage Increase (mV) |
|---|---|---|---|---|---|---|
| Example 1 | 1.45 | 0.73 | 169 | 0.15 | 800 | 140 |
| Example 2 | 1.34 | 0.73 | 156 | 0.14 | 800 | 178 |
| Example 3 | 1.78 | 0.73 | 207 | 0.19 | 800 | 91 |
| Example 4 | 1.53 | 0.73 | 178 | 0.16 | 800 | 137 |
| Example 5 | 1.27 | 0.73 | 148 | 0.13 | 800 | 206 |
| Example 6 | 1.22 | 0.73 | 142 | 0.13 | 800 | 195 |
| Example 7 | 1.38 | 0.73 | 160 | 0.14 | 800 | 182 |
| Example 8 | 1.53 | 0.73 | 178 | 0.16 | 800 | 135 |
| Example 9 | 2.90 | 0.73 | 337 | 0.30 | 800 | 9 |
| Example 10 | 1.02 | 0.73 | 119 | 0.11 | 800 | 242 |
| Example 11 | 1.07 | 0.73 | 124 | 0.11 | 800 | 229 |
| Example 12 | 1.70 | 0.55 | 197 | 0.13 | 600 | 98 |
| Example 13 | 1.45 | 0.64 | 169 | 0.13 | 700 | 125 |
| Example 14 | 1.13 | 0.82 | 132 | 0.13 | 900 | 205 |
| Comparative Example 1 | 0.93 | 1.00 | 108 | 0.13 | 1100 | 306 |
| Comparative Example 2 | 0.85 | 1.00 | 99 | 0.12 | 1100 | 368 |
| Comparative Example 3 | 0.74 | 1.00 | 86 | 0.11 | 1100 | 557 |

As shown in Table 1 and FIG. 1, in Examples 1 to 14 in which the total amount of sulfonic acid groups in the anode catalyst layer was 119 nmol/cm² or more or the sulfonic acid group equivalent of the ionomer was 900 g/mol or less, the total voltage increase was smaller than in Comparative Examples 1 to 3, suggesting higher durability of the water electrolysis cell. It was also found from the results of Examples 1 to 14 that the ratio of the total amount of sulfonic acid groups in the anode catalyst layer to the total amount of sulfonic acid groups in the cathode catalyst layer is preferably 1.02 or more.

Furthermore, in Examples 1, 3, 4, 8, 9, 12, and 13 in which the total amount of sulfonic acid groups in the anode catalyst layer was 169 nmol/cm² or more and the sulfonic acid group equivalent of the ionomer was 800 g/mol or less, the total voltage increase was particularly small, indicating excellent durability.

## Claims

1. An anode catalyst layer included in a water electrolysis cell, the anode catalyst layer comprising:
an ionomer having sulfonic acid groups; and
an anode catalyst,
wherein a total amount of the sulfonic acid groups in the anode catalyst layer is 119 nmol/cm² or more.

2. The anode catalyst layer according to claim 1, wherein a sulfonic acid group equivalent of the ionomer is 900 g/mol or less.

3. An anode catalyst layer included in a water electrolysis cell, the anode catalyst layer comprising:
an ionomer having sulfonic acid groups; and
an anode catalyst,
wherein a total amount of the sulfonic acid groups in the anode catalyst layer is 169 nmol/cm² or more, and a sulfonic acid group equivalent of the ionomer is 800 g/mol or less.

4. A membrane electrode assembly for a water electrolysis cell, the membrane electrode assembly comprising:
an electrolyte membrane;
the anode catalyst layer according to claim 1, the anode catalyst layer being laminated on a first surface of the electrolyte membrane; and
a cathode catalyst layer laminated on a second surface of the electrolyte membrane,
wherein:
the cathode catalyst layer includes an ionomer having sulfonic acid groups, and a cathode catalyst; and
a ratio of the total amount of the sulfonic acid groups in the anode catalyst layer to a total amount of the sulfonic acid groups in the cathode catalyst layer is 1.02 or more.
